(19) **Europäisches Patentamt / European Patent Office / Office européen des brevets**

(11) **EP 4 685 833 A1**

(12) **EUROPEAN PATENT APPLICATION**
published in accordance with Art. 153(4) EPC

(43) Date of publication:
**28.01.2026 Bulletin 2026/05**

(21) Application number: **24774817.1**

(22) Date of filing: **14.03.2024**

(51) International Patent Classification (IPC):
**H01G 11/54** (2013.01)  **H01M 10/0565** (2010.01)
**H01M 10/0568** (2010.01)

(52) Cooperative Patent Classification (CPC):
**H01G 11/54; H01M 10/0565; H01M 10/0568;
Y02E 60/10**

(86) International application number:
**PCT/JP2024/009974**

(87) International publication number:
**WO 2024/195679 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 JP 2023047143**

(71) Applicant: **Nippon Paper Industries Co., Ltd.
Tokyo 114-0002 (JP)**

(72) Inventors:
• **ITO, Tatsunori**
  **Tokyo 114-0002 (JP)**
• **MORITA, Masahiro**
  **Tokyo 114-0002 (JP)**
• **NAKATANI, Takeshi**
  **Tokyo 114-0002 (JP)**
• **WATANABE, Keigo**
  **Tokyo 114-0002 (JP)**

(74) Representative: **Carpmaels & Ransford LLP
One Southampton Row
London WC1B 5HA (GB)**

(54) **ELECTROLYTE FOR POWER STORAGE DEVICE CONTAINING ION-MODIFIED CELLULOSE**

(57)    Provided is an electrolyte for a power storage device such as a capacitor or a secondary battery, the electrolyte containing, as a charge carrier, a substance having a low environmental load and high safety. The electrolyte for a power storage device uses an ion-modified cellulose as a charge carrier. The ion-modified cellulose is preferably anion-modified cellulose, and may be anion-modified cellulose nanofibers.

EP 4 685 833 A1

## Description

TECHNICAL FIELD

The present invention relates to an electrolyte for a power storage device, the electrolyte containing ion-modified cellulose.

BACKGROUND ART

Capacitors and secondary batteries such as a nickel-metal hydride battery (Ni-MH) and a lithium ion battery (LiB) are widely used as repeatedly usable power storage devices. However, resource amounts and uneven distribution of rare metals such as Ni and Li, and the environmental impact in mining have become issues. On the other hand, an electric double layer capacitor (EDLC) does not contain the above-described metals and the like, and has attracted attention from the viewpoint of less environmental impact. However, one of problems with the EDLC is the environmental impact caused by using an organic solvent or the like as a liquid electrolyte.

Actually, an organic solvent such as a carbonate-based or nitrile-based organic solvent is often used in an electrolyte of the EDLC from the viewpoint of solubility and voltage resistance. Although a system using an organic solvent is preferable from the viewpoint of voltage resistance, there are concerns about safety of the organic solvent and environmental impact, and management and production in a dry room are required in order to inhibit the influence of moisture, resulting in the problem of increasing production costs.

Therefore, an aqueous electrolyte is desirably used to reduce the environmental impact. Examples of general aqueous electrolytes include sulfuric acid and a potassium hydroxide aqueous solution. However, while those electrolytes do not need management in a dry room, the polarity thereof is high, and there is a safety concern such as leakage in the event of breakage. In addition, substances used in electrolytes are mainly synthetic materials even in an EDLC free of rare metals. Considering reduction of environmental impact and improvement of safety, it is preferable to mainly use naturally derived materials.

PTL 1 describes that leakage of an electrolyte is suppressed by using a gel electrolyte. However, a polar solvent is used as the electrolyte, and environmental impact is high. PTL 1 also describes that cellulose nanofibers are used as a thickening agent. However, those cellulose nanofibers are not ionic and do not function as a charge carrier in the electrolyte.

PTL 2 discloses an electrolyte layer containing water, and describes that a polysaccharide such as cellulose or cellulose nanofibers are preferably contained in the electrolyte layer. However, those polysaccharides are used to improve mechanical strength, are not ionic, and do not function as a charge carrier in the electrolyte layer.

CITATION LIST

PATENT LITERATURE

PTL 1: Japanese Patent Laid-Open No. 2019-62166
PTL 2: Japanese Patent Laid-Open No. 2021-145120

SUMMARY OF INVENTION

TECHNICAL PROBLEM

An object of the present invention is to provide an electrolyte for a power storage device such as a capacitor or a secondary battery, the electrolyte containing, as a charge carrier, a substance with less environmental impact and high safety.

SOLUTION TO PROBLEM

As a result of intensive studies on the above object, the present inventors have found that cellulose into which an ionic group is introduced (ion-modified cellulose) can be used as a charge charrier in an electrolyte for a power storage device. Naturally-derived cellulose itself is not ionic and does not function as a charge carrier; however, when cellulose is chemically treated to introduce an ionic group into the cellulose, the cellulose becomes able to be used as a charge charrier in an electrolyte for a power storage device. Naturally-derived cellulose can be used as a raw material for the ion-modified cellulose, and the ion-modified cellulose is a material with less environmental impact. In addition, it can be said that an electrolyte using the ion-modified cellulose as a charge carrier is highly safe, because water can be used as a main medium. The present invention includes the following items.

[1] An electrolyte for a power storage device, containing ion-modified cellulose as a charge carrier.

[2] The electrolyte for a power storage device according to item [1], in which the ion-modified cellulose is ion-modified cellulose nanofibers.

[3] The electrolyte for a power storage device according to item [1], in which the ion-modified cellulose is anion-modified cellulose.

[4] The electrolyte for a power storage device according to item [1], in which the ion-modified cellulose is anion-modified cellulose nanofibers.

[5] The electrolyte for a power storage device according to item [3], in which the anion-modified cellulose is carboxymethyl cellulose.

[6] The electrolyte for a power storage device according to item [4], in which the anion-modified cellulose nanofibers are carboxylated cellulose nanofibers.

[7] The electrolyte for a power storage device according to any one of items [1] to [4], in which the content of the ion-modified cellulose is 0.01% to 90% by mass.

[8] The electrolyte for a power storage device according to any one of items [1] to [4], in which the power storage device is a capacitor or a secondary battery.

EFFECTS OF INVENTION

According to the present invention, a power storage device with less environmental impact can be provided by using, as a charge carrier in an electrolyte for the power storage device, ion-modified cellulose obtained from naturally-derived cellulose as a raw material. In addition, water can be used as a medium for the electrolyte, and a safe device can be provided.

DESCRIPTION OF EMBODIMENTS

The present invention is an electrolyte for a power storage device, the electrolyte containing, as a charge carrier, ion-modified cellulose in which an ionic group is introduced into cellulose. A power storage device such as a capacitor or a secondary battery usually has a positive electrode, a negative electrode, and an electrolyte between the positive electrode and the negative electrode. The electrolyte plays a role for transporting a charge between the positive electrode and the negative electrode, while preventing the positive electrode and the negative electrode from directly coming into contact with each other. The present invention is based on the finding that an ion-modified cellulose can be used as a substance that transports a charge in an electrolyte (a charge carrier). Since the ion-modified cellulose can be prepared from naturally-derived cellulose as a raw material, an electrolyte containing the ion-modified cellulose as a charge carrier has an advantage in terms of less environmental impact. In addition, an electrolyte containing the ion-modified cellulose as a charge carrier can be formed as an aqueous electrolyte using water as a main medium, and thus has an advantage in terms of safety in addition to less environmental impact.

(Ion-modified cellulose)

The "ion-modified cellulose" is cellulose obtained by chemically treating a cellulose raw material to introduce an ionic group into a molecular chain of the cellulose. The type of the cellulose raw material used to obtain the ion-modified cellulose is not particularly limited. Examples thereof include bleached or unbleached mechanical pulp (for example, thermomechanical pulp (TMP) and groundwood pulp) and chemical pulp (for example, sulfite pulp and kraft pulp) obtained from a raw material such as softwood, hardwood, cotton, straw, bamboo, hemp, jute, or kenaf; as well as dissolving pulp, regenerated cellulose, microfibrillated cellulose, and microcrystalline cellulose free of amorphous regions. Any of these materials may be used as the cellulose raw material.

The ion-modified cellulose can be prepared by introducing an ionic group into the cellulose raw material. The ionic group may be an anionic group or a cationic group. A method of introducing these ionic groups is not particularly limited. For example, a method described later may be used.

(Anion-modified cellulose)

Cellulose into which an anionic group is introduced as the ionic group is referred to as the "anion-modified cellulose." Although a method of introducing the anionic group is not particularly limited, examples thereof include a method of directly oxidizing hydroxyl groups on pyranose rings of cellulose into carboxyl groups, and a method of introducing the anionic group through etherification reaction or esterification reaction in hydroxyl groups of pyranose rings, as described later.

(Carboxylated cellulose)

As an example of the anion-modified cellulose, carboxylated cellulose having carboxyl groups may be mentioned. The carboxyl groups (-COOH) may have a form of - COOM (metal salt form) (in the formula, M is a metal ion) or a form of -COO⁻ from which the metal ion is dissociated. The carboxylated cellulose can be obtained by using a known method of oxidizing hydroxyl groups of pyranose rings of cellulose into carboxyl groups. Examples of the method of oxidizing cellulose can include a method of oxidizing cellulose with an N-oxyl compound such as a 2,2,6,6-tetramethylpiperidine-1-oxy radical (TEMPO) in water using an oxidizing agent in the presence of a bromide and/or an iodide; and a method of oxidizing cellulose by bringing the cellulose raw material into contact with a gas containing ozone used as an oxidizing agent.

The amount of carboxyl groups in the carboxylated cellulose is preferably 0.4 to 3.0 mmol/g, more preferably 0.6 to 2.0 mmol/g, still more preferably 1.0 to 2.0 mmol/g, and yet still more preferably 1.1 to 2.0 mmol/g with respect to the absolute dry mass of the carboxylated cellulose. The amount of carboxyl groups in the carboxylated cellulose can be adjusted by controlling reaction conditions such as the addition amount of the oxidizing agent and the reaction time. The amount of carboxyl groups can be measured by the following method:

60 ml of 0.5 % by mass carboxylated cellulose slurry (water dispersion) is prepared. 0.1 M hydrochloric acid aqueous solution is added thereto to adjust the pH to 2.5. 0.05 N sodium hydroxide aqueous solution is subsequently added dropwise, and the electrical conductivity is measured until the pH reaches 11. The amount of carboxyl groups is calculated by using the following formula from the sodium hydroxide amount (a) consumed in the weak acid neutralization stage during which change of the electrical conductivity is slow:

carboxyl group amount [mmol/g carboxylated cellulose] = a [ml] $\times$ 0.05 / carboxylated cellulose mass[g]

(Carboxyalkylated cellulose)

As an example of the anion-modified cellulose, carboxyalkylated cellulose having a carboxyalkyl group may be mentioned. In the present specification, the carboxyalkyl group (-RCOOH) (in the formula, R is an alkylene group such as a methylene group or an ethylene group) may have a form of -RCOOM (metal salt form) (in the formula, M is a metal ion) or a form of -RCOO⁻ from which the metal ion is dissociated. Carboxymethylated cellulose in which R is a methylene group is most preferable ("carboxy methyl" and "carboxymethylated" are referred to as "CM" hereinafter) as the carboxyalkylated cellulose. The carboxyalkylated cellulose can be obtained by using a known method of treating the cellulose raw material with a mercerization agent and subsequently treating same with a carboxyalkylation agent to introduce a carboxyalkyl group.

A degree of carboxyalkyl substitution (hereinafter, simply referred to as the "degree of substitution") per anhydroglucose unit of the carboxyalkylated cellulose is not particularly limited. When the degree of substitution is 0.40 or more, carboxyalkylated cellulose easily dissolving in water can be obtained. On the other hand, when the degree of substitution is less than 0.40, carboxyalkylated cellulose easily maintaining a fibrous form even in water can be obtained.

The carboxyalkylated cellulose having a high degree of substitution easily ionizes and can be said to be preferable from the viewpoint of performance as the charge carrier. The degree of substitution in the carboxyalkylated cellulose that has a high degree of substitution and easily dissolves in water is more preferably 0.50 or more, still more preferably 0.60 or more, yet still more preferably 0.70 or more, and further preferably 0.80 or more.

On the other hand, the carboxyalkylated cellulose that has a low degree of substitution and easily maintains a fibrous form even in water can be converted to fibrillated cellulose or cellulose nanofibers by reducing the fiber diameter through defibrillation described later. The fibrillated cellulose and cellulose nanofibers having a small fiber diameter are easily dispersed in the electrolyte uniformly, and thus can be said to be preferable from the viewpoint of ion conductivity. The degree of substitution in the carboxyalkylated cellulose that has a low degree of substitution and easily maintains a fibrous form even in water is preferably 0.10 or more and less than 0.40, more preferably 0.10 or more and 0.35 or less, and still more preferably 0.15 or more and 0.30 or less.

Note that the anhydroglucose unit means individual anhydroglucose (glucose residue) constituting cellulose, and the degree of substitution represents a proportion of hydroxyl groups (-OH) substituted by carboxyalkyl groups (-ORCOOH or -ORCOOM) among the hydroxyl groups (-OH) in glucose residues constituting cellulose (the number of carboxyalkyl groups per glucose residue). The degree of substitution can be adjusted by controlling reaction conditions such as the amount of the mercerization agent and the reaction time. For example, the degree of CM substitution can be measured by the following method:

About 2.0 g of CM cellulose (absolutely dried) is accurately weighed and placed in a 300 mL conical flask with a stopper. 100 mL of a liquid obtained by adding 100 mL of special grade concentrated nitric acid to 900 mL of methanol is added, followed by shaking for 3 hours to convert the CM cellulose in a salt form to CM cellulose in a hydrogen form. 1.5 g to 2.0 g of the CM cellulose (absolutely dried) in a hydrogen form is accurately weighed and placed in a 300 mL conical flask with a stopper. The CM cellulose in a hydrogen form is moistened with 15 mL of 80 % by mass methanol, and 100 mL of 0.1 N NaOH is added, followed by shaking at room temperature for 3 hours. By using phenolphthalein as an indicator, excessive NaOH is subjected to back titration with 0.1 N $H_2SO_4$. The degree of CM substitution (DS) is calculated according to the following formula:

A = [(100 × F' - (0.1 N $H_2SO_4$) (mL) × F) × 0.1] / (mass of absolutely dried CM cellulose in hydrogen form (g))

$$DS = 0.162 \times A / (1 - 0.058 \times A)$$

A: amount (mL) of 1 N NaOH required to neutralize 1 g of CM cellulose in hydrogen form
F: factor of 0.1 N $H_2SO_4$
F': factor of 0.1 N NaOH.

The degree of carboxyalkyl groups other than CM group substitution can also be measured by the same method as described above.

(Phosphoric acid-esterified cellulose)

An example of the anion-modified cellulose is a phosphoric acid-esterified cellulose. The phosphoric acid-esterified cellulose can be obtained by introducing a phosphoric acid-based group derived from a phosphoric acid-based compound into cellulose by mixing powder or an aqueous solution of the phosphoric acid-based compound to the cellulose raw material described above or adding an aqueous solution of the phosphoric acid-based compound to slurry of the cellulose raw material. Examples of the phosphoric acid-based compound include phosphoric acid, polyphosphoric acid, phosphorus acid, hypophosphorous acid, phosphonic acid, and a polyphosphonic acid, and esters and salts thereof. Specific examples thereof include, but are not limited to, phosphoric acid, sodium dihydrogen phosphate, disodium hydrogen phosphate, trisodium phosphate, sodium phosphite, potassium phosphite, sodium hypophosphite, potassium hypophosphite, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. By using one kind thereof or two or more kinds thereof in combination, the phosphoric acid-based group derived from the phosphoric acid-based compound can be introduced into cellulose. In the present specification, the phosphoric acid-based group derived from the phosphoric acid-based compound includes a phosphoric acid group, a phosphorous acid group, a hypophosphorous acid group, a pyrophosphoric acid group, a metaphosphoric acid group, a polyphosphoric acid group, a phosphonic acid group, and a polyphosphonic acid group. The phosphoric acid-esterified cellulose includes those in which one or two or more kinds of these phosphoric acid-based groups are introduced into a molecular chain of cellulose. When the cellulose raw material is reacted with the phosphoric acid-based compound, the phosphoric acid-based compound is preferably used as an aqueous solution because the reaction can proceed uniformly and the efficiency of introduction of the above-described group increases, and at that time, the pH of the aqueous solution is preferably 3 to 7. In addition, a nitrogen-containing compound such as urea may further be added.

The degree of the phosphoric acid-based group substitution per glucose unit in the phosphoric acid-esterified cellulose (hereinafter, simply referred to as "degree of phosphoric acid group substitution") is preferably 0.001 or more and less than 0.40. The degree of phosphoric acid group substitution per glucose unit can be measured by the following method:

Slurry of the phosphoric acid-esterified cellulose having a solid content of 0.2% by mass is prepared. Strongly acidic ion-exchange resin (Amberjet 1024, manufactured by ORGANO CORPORATION, after conditioning) is added to the slurry at a volume ratio of 1/10, followed by shaking treatment for 1 hour. The resultant mixture is then poured onto a mesh having an opening of 90 μm to separate the resin from the slurry, thereby obtaining the phosphoric acid-esterified cellulose in a hydrogen form. Thereafter, a change in the value of electrical conductivity that the slurry exhibits is measured every 30 seconds while adding 50 μL of a 0.1 N sodium hydroxide aqueous solution to the slurry after the treatment with the ion-exchange resin. From the measurement results, the amount of alkali (mmol) required in a region where the electrical conductivity rapidly decreases is divided by the solid content (g) in the slurry to be titrated, thereby calculating the phosphoric acid group amount (mmol/g) per 1 g of the phosphoric acid-esterified cellulose in a hydrogen form. The degree of phosphoric acid substitution per glucose unit of the phosphoric acid-esterified cellulose (DS) is calculated by the following formula:

$$DS = 0.162 \times A/(1 - 0.079 \times A)$$

A: phosphoric acid group amount (mmol/g) per 1 g of phosphoric acid-esterified cellulose in hydrogen form.

(Sulfuric acid-esterified cellulose)

An example of the anion-modified cellulose is a sulfuric acid-esterified cellulose. The sulfuric acid-esterified cellulose can be obtained by introducing a sulfuric acid-based group derived from a sulfuric acid-based compound into cellulose by reacting the cellulose raw material described above with the sulfuric acid-based compound. Examples of the sulfuric acid-based compound include sulfuric acid, sulfamic acid, chlorosulfonic acid, and sulfur trioxide, and esters and salts thereof. Among these, sulfamic acid is preferably used because solubility of cellulose is low, and the acidity is low.

For example, when sulfamic acid is used as the sulfuric acid-based compound, the amount of sulfamic acid to be used can be appropriately adjusted, taking the amount of the anionic group introduced into a cellulose chain into consideration. For example, sulfamic acid may be used in an amount of preferably 0.01 to 50 mol and more preferably 0.1 to 3.0 mol per 1 mol of glucose units in a cellulose molecular.

The amount of the sulfuric acid-based group per glucose unit in the sulfuric acid-esterified cellulose (hereinafter, simply referred to as "sulfuric acid group amount") is preferably 0.1 to 3.0 mmol/g. The sulfuric acid group amount per glucose unit can be measured by the following method:

A water dispersion of the sulfuric acid-esterified cellulose is subjected to solvent substitution with ethanol and t-butanol in this order, and then to freeze dehydration. 15 ml of ethanol and 5 ml of water are added to 200 mg of the obtained sample, followed by stirring for 30 minutes. Thereafter, 10 ml of a 0.5 N sodium hydroxide aqueous solution is added, followed by stirring at 70°C for 30 minutes and then at 30°C for 24 hours. Phenolphthalein is then added as an indicator, titration is conducted with hydrochloric acid, and the sulfuric acid group amount is calculated using the following formula:

Sulfuric acid group amount [mmol/g sample] = (5 - (0.1 $\times$ hydrochloric acid titer [ml] $\times$ 2))/0.2.

(Cation-modified cellulose)

Cellulose into which a cationic group as the ionic group is introduced is referred to as the "cation-modified cellulose." A method of introducing the cationic group is not particularly limited. For example, the cation-modified cellulose can be obtained by a known method of reacting the above-described carboxylated cellulose with a cationization agent such as glycidyltrimethylammonium chloride, (3-chloro-2-hydroxypropyl)trialkylammonium hydride, or a halohydrin form thereof, and an alkali metal hydroxide (sodium hydroxide, potassium hydroxide, or the like) serving as a catalyst in the presence of water or an alcohol having 1 to 4 carbon atoms.

The degree of cation substitution per glucose unit in the cation-modified cellulose is preferably 0.02 to 0.50. The degree of cation substitution can be adjusted by the addition amount of the cationization agent to be reacted and the compositional ratio of water or the alcohol having 1 to 4 carbon atoms. The degree of cation substitution per glucose unit can be measured by the following method:

After the cation-modified cellulose is dried, the nitrogen content is measured using a total nitrogen analyzer (TN-10 manufactured by Mitsubishi Chemical Corporation). The degree of cation substitution (average value of the number of moles of substituents per 1 mole of anhydroglucose units) is calculated by the following formula:

$$\text{Degree of cation substitution} = (162 \times N)/(1 - 151.6 \times N)$$

N: nitrogen content.

(Defibrillation)

The ion-modified cellulose obtained as described above may be directly used in an electrolyte, but may be arbitrarily subjected to a defibrillation treatment, which is a treatment for reducing the diameter of cellulose fibers. A treatment method in a wet or dry manner using a high-pressure homogenizer, a microfluidizer, a refiner, a grinder, a shear mixer, a colloid mill, a beater, a kneader, a disperser, freeze drying pulverization, ultrasound defibrillation, or the like is known as a defibrillation method, but the defibrillation method is not limited thereto.

A degree of defibrillation is not particularly limited. For example, although not limited thereto, the ion-modified cellulose before defibrillation (pulp having been subjected to ion modification) is often fibers having a fiber diameter of 10 to 50 $\mu$m and a fiber length of about 0.5 to 5.0 mm; however, the ion-modified cellulose may be fibrillated cellulose having an average fiber diameter of about 1 to 10 $\mu$m by defibrating the ion-modified cellulose or by making a part of fiber surfaces fluffy (fibrillating). The average fiber diameter of the fibrillated cellulose is more preferably about 5 to 10 $\mu$m. The average fiber length of the fibrillated cellulose is not particularly limited but is about 0.2 to 3.0 mm, more preferably about 0.3 to 2.5 mm, and still more preferably about 0.5 to 2.0 mm. The average fiber diameter and the average fiber length of the fibrillated cellulose can be determined by an image analysis-type fiber analizer such as L & W Fiber Tester Plus manufactured by ABB Corporation, or a fractionator manufactured by Valmet, for example. Specifically, the average fiber diameter and the average fiber length can be measured by the following method:

A water dispersion of fibrillated cellulose diluted to have a solid content concentration of 0.25% by mass is subjected to a fractionator, and the average fiber diameter and the average fiber length are determined as length-weighted fiber width and length-weighted average fiber length, respectively (n = 2).

In the present specification, fibrillated ion-modified cellulose is sometimes referred to as ion-modified fibrillated cellulose. Similarly, fibrillated anion-modified cellulose is sometimes referred to as anion-modified fibrillated cellulose, for example.

The ion-modified cellulose may be arbitrarily defibrillated to have a diameter smaller than the diameter of the fibrillated cellulose, that is, to have an average fiber diameter of less than 1 $\mu$m to provide ion-modified cellulose nanofibers (hereinafter, cellulose nanofibers are referred to as "CNF"). A wet-type high-pressure homogenizer is preferably used to obtain the ion-modified CNF. The average fiber diameter of the ion-modified CNF is more preferably about 3 to 500 nm, still more preferably about 3 nm to 150 nm, and yet still more preferably about 3 nm to 20 nm. The aspect ratio of the ion-modified CNF is preferably 30 or more, more preferably 50 or more, and still preferably 100 or more. The upper limit of the aspect ratio is not limited, but is about 500 or less. The average fiber diameter and the average fiber length of the CNF can be measured by analyzing randomly selected 200 fibers and calculating average values, using an atomic force microscope (AFM) when the diameter is less than 20 nm or a field emission scanning electron microscope (FE-SEM) when the diameter is 20 nm or more. **In** addition, the aspect ratio can be calculated by the following formula:

$$\text{Aspect ratio} = \text{average fiber length} / \text{average fiber diameter}.$$

**In** the present specification, the product obtained by defibrillating the ion-modified cellulose to be CNF having an average fiber diameter less than 1 $\mu$m is referred to as ion-modified CNF. Similarly, CNF obtained by defibrillating the anion-modified cellulose is sometimes referred to as anion-modified CNF, and CNF obtained by defibrillating the carboxylated cellulose is sometimes referred to as carboxylated CNF.

(Electrolyte)

The electrolyte of the present invention contains the above-described ion-modified cellulose as a charge carrier (hereinafter, when simply referring to "ion-modified cellulose," the ion-modified fibrillated cellulose and the ion-modified CNF obtained by defibrillating the ion-modified cellulose are also included in addition to the ion-modified cellulose without defibrillation treatment (undefibrillated ion-modified cellulose) unless otherwise stated). The electrolyte of the present invention can be used in a power storage device such as a capacitor and a secondary battery.

The electrolyte has usually a form in which the ion-modified cellulose is contained in a medium (that is, a dispersion of the ion-modified cellulose), and may have a liquid form or a gel form as a whole. In the present specification, the "gel form" includes both a state in which flowability is reduced as compared to a liquid state, allowing the electrolyte to be scooped with a medicine spoon or the like, and a state in which the electrolyte can be cut and processed to have a predetermined size when the gel strength is high. As an indication of the difference in flowability between the "liquid form" and the "gel form," for example, the "liquid form" has a B-type viscosity of less than 1000 mPa·s (60 rpm, 25°C), whereas the "gel form" has a B-type viscosity of 1000 mPa·s or more (60 rpm, 25°C), without particular limitations. From the viewpoint that the ion-modified cellulose easily functions as a good charge carrier in the electrolyte, the electrolyte is preferably a form of a dispersion that contains a medium and a dispersoid including the ion-modified cellulose, and a state in which the dispersoid and the medium are both continuously distributed (uniformly dispersed) throughout the entire electrolyte is preferable. In addition, it is more preferable that the electrolyte exhibit solid-like characteristics like gel. In a case of the electrolyte having the "gel form," the B-type viscosity thereof is preferably 1000 mPa·s or more, more preferably 5000 mPa·s or more, and still more preferably 10000 mPa·s or more.

Note that ion-modified cellulose such as CM cellulose may be not only used as the charge carrier in the electrolyte but also as a binder in an electrode as described later. The ion-modified cellulose used in an electrode as a binder strengthens bonding between electrode materials to impart mechanical strength, and the presence form of such ion-modified cellulose is independent between electrode materials, and the ion-modified cellulose does not extend continuously between the positive and negative electrodes; therefore, the ion-modified cellulose does not function as a charge carrier for the entire power storage device. Even when the material used as the binder is in contact with the electrolyte and the medium, the function thereof is to bond the electrode materials and impart mechanical strength, and the material used as the binder does not exist as a charge carrier. Accordingly, a power storage device including ion-modified cellulose which is not present in the electrolyte and is present only as the binder in an electrode is outside the scope of the present invention. The ion-modified cellulose used as the charge carrier in the electrolyte of the present invention functions as the charge carrier continuously between the positive and negative electrodes.

The medium in the electrolyte may be any medium as long as the medium can disperse the ion-modified cellulose and allows the ion-modified cellulose to ionize. However, from the viewpoint of less environmental impact and safety, water is most preferably used. Examples of the medium other than water include aqueous organic solvents such as methanol, ethanol, isopropanol, 2-propanol, butanol, glycerin, acetone, methylethylketone, 1,4-dioxane, N-methyl-2-pyrrolidone, tetrahydrofuran, N,N-dimethylformamide, N,N-dimethylacetamide, dimethylsulfoxide, acetonitrile, ethylene glycol, ethylene carbonate, propylene glycol, and propylene carbonate; glymes such as tetraethylene glycol dimethyl ether; sulfones such as sulfolane; and combinations thereof. The proportion of water in the medium is preferably 80% by mass or more, more preferably 90% by mass or more, still more preferably 95% by mass or more, and most preferably 100% by mass (the medium is entirely water).

The electrolyte preferably includes the medium and the ion-modified cellulose, but may include one kind or two or more kinds of substances other than the medium and the ion-modified cellulose in a range not impairing the function of the ion-modified cellulose as the charge carrier. Examples of such substances include polymers added to improve mechanical strength, such as nonionic cellulose, a cellulose derivative, chitin, chitosan, polyvinyl alcohol, polyethylene glycol, polyvinylidene fluoride, polyethylene terephthalate, a polymethyl methacrylate resin, polyethylene, polypropylene, polyethylene oxide, poly(vinylidene fluoride-hexafluoropropylene), a polyparabanic acid resin, a polyether resin, a polyester resin, a polyether derivative, a polyimine resin, a polyamide resin, and a polycarbonate resin; ionic liquids; electrolytes other than the ion-modified cellulose (for example, an organic acid and a salt thereof, an inorganic acid and a salt thereof, a polymer-type electrolyte such as a perfluorosulfonic acid polymer, and an inorganic electrolyte such as a glass ceramic); electrolytic salts (for example, a lithium salt such as lithium hexafluorophosphate, and a quaternary ammonium salt); ethylene carbonate; dimethyl carbonate; ethyl methyl carbonate; diethyl carbonate; vinylene carbonate; 1,3-propane sultone; methanesulfonic acid (R)-1-methyl-2-propynyl; cyclohexylbenzene; tert-amylbenzene; adiponitrile; phthalic acid esters; adipic acid esters; trimellitic acid esters; polyesters; phosphoric acid esters; citric acid esters; epoxidize vegetable oil; sebacic acid esters; azelaic acid esters; maleic acid esters; and benzoic acid esters.

The content of the ion-modified cellulose with respect to the total mass of the electrolyte is preferably 0.01% to 90% by mass, more preferably 0.01% to 80% by mass, still more preferably 0.01% to 50% by mass, yet still more preferably 0.5% to 40% by mass, yet still more preferably 0.5% to 30% by mass, and yet still more preferably 1.0% to 30% by mass. In addition, the content of the ion-modified cellulose may be 0.5% to 20% by mass and 1.0% to 20% by mass. When the content of the ion-modified cellulose is less than 0.01% by mass, performance as the charge carrier tends to be decreased.

The conductivity of the electrolyte containing, as the charge carrier, the ion-modified cellulose of the present invention in the thickness direction of the electrolyte as measured by a method described in the examples described later is more preferably 0.01 mS/cm or more, still more preferably 0.10 mS/cm or more, and yet still more preferably 1.00 mS/cm or more.

(Power storage device)

The electrolyte of the present invention can be used as an electrolyte for a power storage device such as a capacitor or a secondary battery. As components other than the electrolyte used to form the power storage device, generally used components may be used without particular limitation. For example, when an electric double layer capacitor (EDLC) is formed, activated carbon having undergone activation treatment may be used as the positive and negative current collector electrodes, but not limited thereto. Examples of raw materials for the activated carbon include coconut shell, coke, and phenolic resin, but are not limited thereto. The shape of the activated carbon may be a powder shape, a fibrous shape, or the like, but is not limited thereto. For example, a sheet-shaped current collector electrode can be formed by making activated carbon into powder of 10 $\mu$m or less and applying same onto a current collector base material having a thickness of about 10 to 30 $\mu$m. As the current collector base material, a metal, a metal oxide, carbon, a conductive polymer, a polymer to which electrical conductivity is imparted by dispersing carbon or a metal in the polymer, or the like can be used, but not limited thereto. A conductive paste known as a primer may be thinly applied in advance to the current collector base material as required. In addition, a conductive aid for improving conductivity and a binder for stably adhering activated carbon to the current collector base material may also be used. Examples of the conductive aid include graphite, carbon black, acetylene black, and Ketjenblack. Examples of the binder include styrene butadiene rubber (SBR), polytetrafluoroethylene, and cellulose-based binders such as CM cellulose and CNF in a case of an aqueous binder. In addition, in a case of an organic binder, examples thereof include polyvinylidene fluoride. For example, a sheet-shaped electrode can be obtained by mixing activated carbon, the binder, the conductive aid, a solvent (water in the case of the aqueous binder, and N-methyl pyrrolidone or the like in the case of the organic binder), and optionally a thickening agent (auxiliary binder) to prepare slurry, and applying the slurry onto the current collector base material, followed by drying. The electrode may also be, for example, densified as appropriate by pressing, calendering, or the like as required.

When an EDLC is formed, a separator may be disposed between the positive and negative electrode sheets. A material for the separator is not particularly limited, and a known material may be used. For example, the separator may be a cellulose-based separator, or a glass-based separator, a resin film-based separator, or an unwoven fabric-based separator.

The separator is provided for the purpose of preventing direct contact between the positive electrode and the negative electrode, in general. However, in the present invention, the dispersion of the ion-modified cellulose used as the electrolyte may form a gel with high viscosity or may be electrodeposited onto an electrode to form a film depending on the type thereof. In this case, since the electrolyte (dispersion of the ion-modified cellulose) itself can serve the same function as the separator, the EDLC may be free of any separator. The thickness of the film formed on the electrode can be adjusted by adjusting the type and content of the ion-modified cellulose, energization time, and the like, and a film having a thickness of about 0.1 $\mu$m to 100 mm can be formed on the electrode depending on these conditions, for example. When the film of the ion-modified cellulose formed on the electrode is used as the separator, a film having a thickness of 0.1 $\mu$m or less tends to easily cause short-circuiting between electrodes, and a film having a thickness of 100 mm or more tends to increase the volume as the power storage device and increase resistance between the electrodes.

The EDLC can be formed by disposing the electrolyte and optionally the separator between the positive electrode and the negative electrode and sealing same in an exterior casing. The shape of the EDLC is not particularly limited and may be any shape such as a coin shape, a cylindrical shape, a prismatic shape, or a laminated shape.

In a case of forming a secondary battery, generally used components can be used as components other than the electrolyte without particular limitation as in the case of forming a capacitor. That is, a secondary battery can be formed from a positive electrode including a positive electrode active material, a negative electrode including a negative electrode active material, and the electrolyte disposed therebetween. The positive electrode can be produced by applying, on a positive electrode current collector, a paste in which the positive electrode active material, a binder, a solvent, a conductive aid, and the like are mixed, for example. The negative electrode can be produced by applying, on a negative electrode current collector, a paste in which the negative electrode active material, a binder, a solvent, a conductive aid, and the like are mixed in a similar manner, for example. A separator may be disposed as in the case of the capacitor, or may not be disposed depending on the state of the electrolyte. The shape of the secondary battery is not particularly limited, and may be any shape such as a coin shape, a cylindrical shape, a prismatic shape, or a laminated shape.

The electrolyte of the present invention has less environmental impact, and can also be suitably used as an electrolyte of a primary battery mainly used as a disposable power storage device. In addition, the electrolyte of the present invention can be used as an electrolyte for a power storage device in a broad category of power storage devices including a fuel cell and an air cell. These devices directly generate electricity by means of chemical reaction and serve as power storage devices in a broad sense by virtue of the ability to efficiently supply energy.

EXAMPLES

The present invention will be described in more detail by way of examples below. However, the present invention is not limited to the following examples.

(Example 1)

(Preparation of ion-modified cellulose)

Bleached, unbeaten kraft pulp derived from softwood (brightness: 85%) in an amount of 500 g (absolutely dried) was added to 50 L of an aqueous solution in which TEMPO (Sigma-Aldrich) (0.025 mmol/g based on the cellulose raw material) and sodium bromide (1.0 mmol/g based on the cellulose raw material) were dissolved, followed by stirring until the pulp was uniformly dispersed. A sodium hypochlorite aqueous solution was added to the reaction system so as to achieve 5.2 mmol/g based on the cellulose raw material, initiating oxidation reaction. While the pH value in the system decreased during the reaction, a 3M sodium hydroxide aqueous solution was sequentially added to adjust the pH value to 10. The reaction was terminated when the sodium hypochlorite had been consumed and the pH value in the system became constant. The mixture after the reaction was filtered with a glass filter to separate pulp, and the pulp was sufficiently washed with water to obtain oxidized pulp. The pulp yield at this time was 90%, and the time required for the oxidation reaction was 100 minutes. The oxidized pulp (carboxylated cellulose) obtained from the above-described steps was adjusted to have a concentration of 0.5% (w/v) using water, and was subjected to a defibrillation treatment with a high-pressure homogenizer (20°C, 150 MPa) five times to obtain a dispersion liquid of carboxylated CNF. The carboxyl group amount of the obtained carboxylated CNF was 1.30 mmol/g.

(Measurement of conductivity of electrolyte)

A gasket was disposed between graphite electrodes having an electrode area of 2 cm$^2$, and the space defined by the electrodes and the gasket was filled with, as an electrolyte, a dispersion of the above-obtained carboxylated CNF (carboxylated CNF content: 0.5% by mass) in water as a dispersion medium to produce a coin-shaped cell. The obtained coin-shaped cell was subjected to alternating-current impedance measurement with an electrochemical evaluation device (SP-300, manufactured by BioLogic) in an environment of 25°C using an alternating current of 7 MHz to 100 mHz. The amplitude of the alternating-current signal was set to 10 mV. The conductivity (mS/cm) of the electrolyte was calculated by using the following formula from the electrolyte resistance value at a frequency of 10 kHz obtained from the measurement:

$$\sigma = \{L / (R \times A)\} \times 1000$$

σ: conductivity (mS/cm)
L: electrolyte thickness (thickness defined by gasket) (cm)
R: electrolyte resistance (Ω)
A: electrode area (cm$^2$).

(Measurement of electrostatic capacitance)

Activated carbon (manufactured by KUREHA CORPORATION) after an activation treatment as a porous electrode, carbon black (manufactured by Denka Company Limited, model number: Li-400) as a conductive aid, and styrene butadiene rubber (SBR) (manufactured by JSR Corporation, model number: TRD2001) as a binder were mixed at a dry mass ratio of 10:1:0.5 in water, and dispersed at 2000 rpm for 20 minutes using a planetary centrifugal mixer to obtain a carbon dispersion having a concentration of 30% by mass. The carbon dispersion was applied onto an etched aluminum foil (25 cm × 20 cm, thickness: 20 μm) as a current collector base material, and moisture was then removed by a drier at 80°C to obtain a porous current collector electrode having a coating film mass of 40 g/m$^2$. The obtained porous current collector electrode was punched out into a piece of an area of 4 cm$^2$, and the piece was used as positive and negative electrodes.
The above-obtained dispersion (carboxylated CNF content: 0.5% by mass) of the carboxylated CNF in water as the dispersion medium was prepared and used as an electrolyte. A gasket having a thickness of 1 mm was disposed between a positive electrode and a negative electrode, and the space defined by the positive electrode, the gasket, and the negative electrode was filled with the above electrolyte to produce a coin-shaped cell. No separator was used.
The obtained cell was subjected to a discharge and charge test using an electrochemical evaluation device (SP-300, manufactured by BioLogic), and the electrostatic capacitance (mF) was calculated from a discharge curve of the third cycle. The discharge and charge conditions were as follows:

(1) CC charging was performed at a charging current of 1 mA until the voltage reached 1.2 V, followed by CV charging at 1.2 V for 5 minutes;
(2) CC discharging was subsequently performed at a discharging current of 1 mA until the voltage decreased to 0.1 V; and
(3) the electrostatic capacitance was then calculated from a discharge curve plotting voltage (vertical axis) against time (horizontal axis).

(Example 2)

A dispersion (carboxylated CNF content: 2.0% by mass) of the carboxylated CNF in water as the dispersion medium was obtained in the same manner as in Example 1 except that the concentration of the oxidized pulp subjected to the defibrillation treatment with a high-pressure homogenizer was changed from 0.5% to 2.0% during preparation of the ion-modified cellulose. The conductivity of the obtained dispersion was measured in the same manner as in Example 1 except that a gel electrolyte was formed on an electrode without using a gasket, and the "L: electrolyte thickness" was calculated from the "distance between electrodes." In addition, the electrostatic capacitance when using this electrolyte was measured in the same manner as in Example 1.

(Example 3)

A dispersion (carboxylated CNF content: 5.0% by mass) of the carboxylated CNF in water as the dispersion medium was obtained in the same manner as in Example 1 except that the concentration of the oxidized pulp subjected to the defibrillation treatment with a high-pressure homogenizer was changed from 0.5% to 5.0% during preparation of the ion-modified cellulose. The conductivity of the obtained dispersion was measured in the same manner as in Example 2. In addition, the electrostatic capacitance when using this electrolyte was measured in the same manner as in Example 1.

(Example 4)

A dispersion (carboxylated CNF content: 0.5% by mass) of the carboxylated CNF in water as the dispersion medium was prepared in the same manner as in Example 1. The obtained dispersion was applied onto each of an electrode for electrostatic capacitance measurement and an electrode for conductivity measurement, followed by drying at 50°C for 12 hours to obtain a joined body of each electrode and the electrolyte (ion-modified cellulose film, basis weight: 50 g/m$^2$). A solvent (water) was added to the electrolyte film on the obtained joined body so that the content of the charge carrier (carboxylated CNF) became 15% by mass with respect to the total mass of the electrolyte. The film swelled and turned into a gel form. The conductivity of the obtained gel electrolyte film was measured in the same manner as in Example 2. In addition, the other electrode was stacked on the electrolyte film (gel) side of the obtained joined body to produce a coin-shaped cell. The electrostatic capacitance was measured in the same manner as in Example 1 using the obtained cell.

(Example 5)

The conductivity of the gel electrolyte film and the electrostatic capacitance when this electrolyte film was used were measured in the same manner as in Example 4 except that the solvent (water) was added to the electrolyte film so that the content of the charge carrier (carboxylated CNF) became 30% by mass with respect to the total mass of the electrolyte.

(Example 6)

The conductivity of the gel electrolyte film and the electrostatic capacitance when this electrolyte film was used were measured in the same manner as in Example 4 except that the solvent (water) was added to the electrolyte film so that the content of the charge carrier (carboxylated CNF) became 80% by mass with respect to the total mass of the electrolyte.

(Example 7)

The conductivity was measured in the same manner as in Example 1 using, as the electrolyte, a water dispersion (CM cellulose content: 0.5% by mass) of a commercially available carboxymethyl cellulose sodium salt (FS350HC, manufactured by Nippon Paper Industries Co., Ltd.) (degree of CM substitution: 0.90) instead of the water dispersion of the carboxylated CNF. In addition, a coin-shaped cell was produced in the same manner as in Example 1 except that this electrolyte was used, and the electrostatic capacitance was measured.

(Example 8)

A coin-shaped cell was produced in the same manner as in Example 1 except that a cellulose separator (thickness: 50 $\mu$m) was disposed in the electrolyte between the positive electrode and the negative electrode, and the electrostatic capacitance was measured. Since the electrolyte is the same as that in Example 1, the conductivity of the electrolyte is also the same as that in Example 1.

(Comparative Example 1)

The conductivity was measured in the same manner as in Example 1 using, as the electrolyte, a water dispersion (CNF content: 0.5% by mass) of a nonionic fine cellulose including nonionic CNF instead of the water dispersion of the carboxylated CNF. In addition, a coin-shaped cell was produced in the same manner as in Example 1 except that this electrolyte was used, and the electrostatic capacitance was measured. The water dispersion of the nonionic fine cellulose was prepared by suspending commercially available powder cellulose (product name: KC FLOCK (registered trademark) W-50 manufactured by Nippon Paper Industries Co., Ltd.) in water to prepare slurry having a concentration of 0.5% by mass, and defibrillating same with a high-pressure homogenizer (20°C, 150 MPa) ten times.

Measurement results of the electrostatic capacitance of each of Examples and Comparative Example and the conductivity of each electrolyte are shown in Table 1.

[Table 1]

| | Charge carrier | | Medium | State of electrolyte | Conductivity (mS/cm) | Separator | Electrostatic capacitance (mF) |
|---|---|---|---|---|---|---|---|
| | Type | Content | | | | | |
| Example 1 | Carboxylated CNF | 0.5% by mass | Water | Liquid form | 0.15 | Absent | 715 |
| Example 2 | Carboxylated CNF | 2.0% by mass | Water | Gel form | 0.29 | Absent | 968 |
| Example 3 | Carboxylated CNF | 5.0% by mass | Water | Gel form | 0.76 | Absent | 1209 |
| Example 4 | Carboxylated CNF | 15% by mass | Water | Gel form | 1.52 | Absent | 1261 |
| Example 5 | Carboxylated CNF | 30% by mass | Water | Gel form | 1.47 | Absent | 2029 |
| Example 6 | Carboxylated CNF | 80% by mass | Water | Gel form | 0.42 | Absent | 250 |
| Example 7 | CM cellulose | 0.5% by mass | Water | Liquid form | 0.26 | Absent | 485 |
| Example 8 | Carboxylated CNF | 0.5% by mass | Water | Liquid form | 0.15 | Present | 600 |
| Comparative Example 1 | Nonionic fine cellulose | 0.5% by mass | Water | Liquid form | <0.01 | Absent | 0 |

From the results in Table 1, it has been found that the ion-modified cellulose can be used as a charge carrier of an electrolyte for a power storage device. When the content of the ion-modified cellulose (charge carrier) in the electrolyte was increased to a certain level, a tendency for increased conductivity was observed, and an increase in the electrostatic capacitance was also confirmed. A higher conductivity indicates a greater ionic conductivity of the electrolyte. An electrolyte gelled by increasing the content of the ion-modified cellulose itself can serve the same function as a separator, thus providing the advantage of reduction in the number of parts through omission of the separator.

**Claims**

1.    An electrolyte for a power storage device, comprising ion-modified cellulose as a charge carrier.

2.    The electrolyte for a power storage device according to claim **1,** wherein the ion-modified cellulose is ion-modified cellulose nanofibers.

3.    The electrolyte for a power storage device according to claim **1,** wherein the ion-modified cellulose is anion-modified cellulose.

4.    The electrolyte for a power storage device according to claim **1,** wherein the ion-modified cellulose is anion-modified cellulose nanofibers.

5.    The electrolyte for a power storage device according to claim 3, wherein the anion-modified cellulose is carboxymethyl cellulose.

6.    The electrolyte for a power storage device according to claim 4, wherein the anion-modified cellulose nanofibers are carboxylated cellulose nanofibers.

7.    The electrolyte for a power storage device according to any one of claims 1 to 4, wherein a content of the ion-modified cellulose is 0.01% to 90% by mass.

8. The electrolyte for a power storage device according to any one of claims 1 to 4, wherein the power storage device is a capacitor or a secondary battery.

## INTERNATIONAL SEARCH REPORT

| | International application No. |
|---|---|
| | **PCT/JP2024/009974** |

**A. CLASSIFICATION OF SUBJECT MATTER**

*H01G 11/54*(2013.01)i; *H01M 10/0565*(2010.01)i; *H01M 10/0568*(2010.01)i
FI:   H01G11/54; H01M10/0568; H01M10/0565

According to International Patent Classification (IPC) or to both national classification and IPC

**B. FIELDS SEARCHED**

Minimum documentation searched (classification system followed by classification symbols)

H01G11/54; H01M10/0565; H01M10/0568

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/162591 A1 (MAXELL HOLDINGS LTD.) 13 August 2020 (2020-08-13) paragraphs [0029], [0054], [0061] | 1, 3, 5, 7, 8 |
| Y | paragraphs [0029], [0054], [0061] | 2, 4, 6-8 |
| Y | JP 2019-206521 A (NIPPON PAPER INDUSTRIES CO., LTD.) 05 December 2019 (2019-12-05) paragraph [0067] | 2, 4, 6-8 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**14**

**INTERNATIONAL SEARCH REPORT**
**Information on patent family members**

International application No.

**PCT/JP2024/009974**

| Patent document cited in search report | Publication date (day/month/year) | Patent family member(s) | Publication date (day/month/year) |
|---|---|---|---|
| WO 2020/162591 A1 | 13 August 2020 | US 2022/0093996 A1 paragraphs [0033], [0058], [0065]<br>EP 3916864 A1 paragraphs [0029], [0054], [0061]<br>CN 113474925 A paragraphs [0040], [0068], [0075] | |
| JP 2019-206521 A | 05 December 2019 | (Family: none) | |

Form PCT/ISA/210 (patent family annex) (July 2022)

**REFERENCES CITED IN THE DESCRIPTION**

**Patent documents cited in the description**

- JP 2019062166 A

- JP 2021145120 A